# EUROPÄISCHE PATENTSCHRIFT

(11) **EP 3 498 951 B1**
(45) Veröffentlichungstag und Bekanntmachung des Hinweises auf die Patenterteilung: **01.01.2020**
(21) Anmeldenummer: 18197433.8
(22) Anmeldetag: 28.09.2018
(51) Int. Cl.: E05B 79/06, E05B 81/00, E05B 85/10

(54) **TÜRGRIFFRINHEIT UND VERFAHREN ZUR MONTAGE EINER SOLCHEN TÜRGRIFFEINHEIT**
DOOR HANDLE UNIT AND METHOD OF MOUNTING SUCH A DOOR HANDLE UNIT
UNITÉ DE POIGNÉE DE PORTE ET PROCÉDÉ DE MONTAGE D'UNE TELLE UNITÉ

(30) Priorität: 11.12.2017 DE 102017129431
(43) Veröffentlichungstag der Anmeldung: 19.06.2019
(73) Patentinhaber: Brose Fahrzeugteile GmbH & Co. Kommanditgesellschaft, Bamberg, 96052 Bamberg (DE)
(72) Erfinder: Schnetter, Sebastian, 96182 Reckendorf (DE); Almes, Bert, 06237 Leuna (DE); Bücker, Rolf, 96049 Bamberg (DE); Rudnik, Lukas, 37186 Moringen (DE)
(74) Vertreter: Gottschald Patentanwälte Partnerschaft mbB

(56) Entgegenhaltungen:
- EP-A1- 0 980 948
- EP-A1- 1 306 503
- WO-A2-03/008743
- DE-A1-102015 209 851
- US-A1- 2011 148 575

## Beschreibung

Die Erfindung betrifft eine Türgriffeinheit für eine Kraftfahrzeugtür gemäß dem Oberbegriff von Anspruch 1, ein Montagemodul für eine Kraftfahrzeugtür mit einer solchen Türgriffeinheit gemäß Anspruch 15, eine Kraftfahrzeugtür mit einer solchen Türgriffeinheit gemäß Anspruch 18 sowie ein Verfahren zur Montage einer solchen Türeinheit an einer Kraftfahrzeugtür gemäß Anspruch 19.

Eine in Rede stehende Türgriffeinheit muss heute eine Mehrzahl von Anforderungen erfüllen, die zumindest zum Teil einander zuwiderlaufen. Eine Anforderung besteht darin, dass das Griffteil eine aus haptischer Sicht möglichst komfortable Betätigung der Kraftfahrzeugtür ermöglicht. Eine andere Anforderung besteht dagegen darin, dass die Türgriffeinheit insgesamt die Formgestaltung des Kraftfahrzeugs möglichst wenig beeinträchtigen soll. Dies hat dazu geführt, dass insbesondere bei Oberklassefahrzeugen verstellbare Griffteile zur Anwendung kommen.

Die bekannte Türgriffeinheit (US 2011/0148575 A1), von der die Erfindung ausgeht, erlaubt die Verstellung des Griffteils zwischen einer Parkstellung, in der das Griffteil bündig mit der Türaußenhaut abschließt, und einer Betätigungsstellung, in der das Griffteil von der Türaußenhaut abragt und insoweit von einer Hand des Benutzers leicht gegriffen werden kann. Hierfür ist die Türgriffeinheit mit einem Griffmodul ausgestattet, das einen Mechanismus zur motorischen Verstellung des Griffteils bereitstellt.

Um den bündigen Abschluss des sich in der Parkstellung befindlichen Griffmoduls mit der Türaußenhaut der Kraftfahrzeugtür zu erreichen, ist die Türgriffeinheit als solche von der Türinnenseite aus an einer Griffausnehmung der Türaußenhaut zu montieren. Eine Befestigungsmöglichkeit von der Türaußenseite aus, wie beispielsweise im Bereich der Griffschalen älterer Türgriffeinheiten bekannt ist, besteht regelmäßig nicht.

Die bekannte Türgriffeinheit wird daher von der Türinnenseite aus mit Schraubelementen an der Türaußenhaut bzw. an einem der Türaußenhaut zugeordneten Tür-Strukturelement fixiert, was relativ aufwändig ist. Hinzu kommt, dass eine effiziente Montage unter Verwendung von Türmodulen mit der bekannten Türgriffeinheit kaum möglich ist. Ein solches Türmodul, das neben der Türgriffeinheit ein Kraftfahrzeugschloss, eine Fensterführungsschiene o.dgl. aufnehmen kann und eine gleichzeitige Montage all dieser Funktionskomponenten erlaubt, verschließt nämlich üblicherweise die Öffnung in der Nass-Trockenraum-trennung der Kraftfahrzeugtür, durch die hindurch die Türgriffeinheit für deren Befestigung zugänglich wäre. Insoweit muss bei der Montage der bekannten Türgriffeinheit auf die an sich effiziente Verwendung von Türmodulen verzichtet werden.

Eine weitere bekannte Türgriffeinheit ist im Dokument DE 10 2015 209 851 A1 offenbart.

Der Erfindung liegt das Problem zu Grunde, die bekannte Türgriffeinheit derart auszugestalten und weiter zu bilden, dass die Effizienz bei der Fertigung der zugeordneten Kraftfahrzeugtür gesteigert wird.

Das obige Problem wird bei einer Türgriffeinheit gemäß dem Oberbegriff von Anspruch 1 durch die Merkmale des kennzeichnenden Teils von Anspruch 1 gelöst.

Im Einzelnen weist die Türgriffeinheit einen Befestigungsschieber auf, der bei vormontierter Türgriffeinheit mit dem Griffmodul einerseits und der Kraftfahrzeugtür andererseits gekoppelt ist. Im Rahmen der Vormontage findet eine Vorpositionierung der Türgriffeinheit an der Kraftfahrzeugtür statt, was die Voraussetzung für die anschließende Endmontage darstellt.

Zur Endmontage der Türgriffeinheit wird vorgeschlagen, dass von einer Schmalseite der Kraftfahrzeugtür aus mittels eines Werkzeugs eine Montagebewegung in einer Montagerichtung in den Befestigungsschieber einleitbar ist. Wesentlich dabei ist, dass der Befestigungsschieber mindestens ein Eingriffselement aufweist, das eingerichtet ist, im Rahmen der Endmontage mit einem Gegeneingriffselement wechselzuwirken und aus der Montagebewegung eine Verspannung des Griffmoduls mit der Türaußenhaut oder einem der Türaußenhaut zugeordneten Tür-Strukturelement zu erzeugen. Die mit der vorschlagsgemäßen Verspannung einhergehende Verspannkraft wirkt vorzugsweise quer zu der Montagerichtung.

Bei geeigneter Auslegung kann die komplette Befestigung der Türgriffeinheit an der Kraftfahrzeugtür von der Schmalseite der Kraftfahrzeugtür aus erfolgen.

Vorzugsweise handelt es sich bei der Schmalseite um die Stirnseite der Kraftfahrzeugtür, an der das Kraftfahrzeugschloss angeordnet ist. Bei einer schwenkbaren Kraftfahrzeugtür ist dies die Stirnseite, die dem Türscharnier gegenüberliegend angeordnet ist.

Mit der vorschlagsgemäßen Befestigung der Türgriffeinheit kann die Türgriffeinheit effizient über ein Montagemodul, insbesondere ein Türmodul oder ein Schlossmodul, in oder an der Kraftfahrzeugtür vormontiert und anschließend endmontiert werden. Die Befestigung von der Schmalseite der Kraftfahrzeugtür aus lässt sich bei in oder an die Kraftfahrzeugtür ein- oder angesetztem Montagemodul leicht umsetzen. Damit ist es ferner möglich, das gesamte Montagemodul noch vor der Montage an der Kraftfahrzeugtür als Baugruppe zu testen, was regelmäßig mit einer Steigerung der Qualität im Rahmen der Fertigung der Kraftfahrzeugtür verbunden ist.

Die vorschlagsgemäße Lösung ist auch hinsichtlich der resultierenden Bauraumausnutzung vorteilhaft. Dies liegt insbesondere daran, dass der Bauraum zwischen der Türgriffeinheit und der hier relevanten Schmalseite der Kraftfahrzeugtür meist ungenutzt bleibt, so dass eine Nutzung dieses Bauraums für die Betätigung des Befestigungsschiebers besonders sachgerecht ist.

Mit der vorschlagsgemäßen Lösung lässt sich die Befestigung der Türgriffeinheit insgesamt mit der Betätigung eines einzigen Befestigungsschiebers realisieren. Hierfür ist es gemäß den Ansprüchen 2 und 3 vorgesehen, dass mindestens zwei voneinander beabstandete Eingriffselemente vorgesehen sind. Die Beabstandung der Eingriffselemente voneinander sorgt dafür, dass das vorschlagsgemäße Verspannen des Griffmoduls an verschiedenen Stellen des Griffmoduls und damit bei geeigneter Auslegung gleichmäßig über das Griffmodul erfolgt.

Bei der besonders bevorzugten Ausgestaltung gemäß Anspruch 4 ist der Befestigungsschieber als formstabile Komponente ausgestaltet. Dies bedeutet, dass sich die Montagebewegung unmittelbar auf alle Eingriffselemente fortsetzt, ohne dass irgendwelche Getriebe- oder Übertragungselemente erforderlich sind. Dies führt zu einer besonders einfachen Realisierbarkeit der vorschlagsgemäßen Lösung.

Bevorzugte Varianten für die Vormontage der Türgriffeinheit sind Gegenstand von Anspruch 5. Wesentlich ist hier, dass mit der Vormontage eine Vorpositionierung der Türgriffeinheit an der Kraftfahrzeugtür realisiert ist. Dies erlaubt wiederum die vorschlagsgemäße Endmontage der Türgriffeinheit durch eine Betätigung des Befestigungsschiebers.

Eine besonders komfortable Erzeugung der in den Befestigungsschieber einzuleitenden Montagebewegung ist Gegenstand von Anspruch 6. Die dortige Vorschubeinrichtung bedient sich in einer vorteilhaften Variante eines einfachen Schraubelements zu Erzeugung der Montagebewegung, was nicht nur konstruktiv einfach umsetzbar ist, sondern auch eine gute Haltewirkung garantiert.

Die weiter bevorzugten Ausgestaltungen gemäß den Ansprüchen 7 und 8 betreffen die Erzeugung eines Umlenkmechanismus über die Wechselwirkung von Eingriffselement und Gegeneingriffselement. Der Umlenkmechanismus leitet als Reaktion auf die Montagebewegung je nach Ausgestaltung eine Zustellbewegung in den Befestigungsschieber und/oder in das Griffmodul ein, die auf die Türaußenhaut zu gerichtet ist. Hier zeigt sich, dass sich das Grundprinzip der vorschlagsgemäßen Lösung auf ganz unterschiedliche konstruktive Weise umsetzen lässt.

Eine für eine leichte Vor- und oder Endmontage der Türgriffeinheit vorgeschlagene Randbedingung besteht gemäß Anspruch 9 darin, dass Eingriffselement und Gegeneingriffselement zur Vormontage und/oder zur Endmontage paarweise ineinander eintauchen. Bei geeigneter Auslegung lässt sich hier ein einfaches 3Einfädeln" der Türgriffeinheit an der Kraftfahrzeugtür realisieren.

Eine insbesondere für die Realisierung eines abdichtenden Eingriffs zwischen dem Griffmodul und der Griffausnehmung der Türaußenhaut bevorzugte Lösung ist Gegenstand von Anspruch 10, nach dem sich das Griffmodul von der Türinnenseite aus an der Türaußenhaut bzw. an einem der Türaußenhaut zugeordneten Tür-Strukturelement abstützt. Das Zwischenschalten einer eventuell vorgesehenen Dichtung ist hier ohne Weiteres möglich. Die Gegenabstützung wird vorzugsweise von dem Befestigungsschieber übernommen, der ebenfalls auf die Türaußenhaut bzw. auf ein der Türaußenhaut zugeordnetes Tür-Strukturelement wirkt, diesmal allerdings zur Türinnenseite hin.

Bei einer bevorzugten Umsetzungsvariante gemäß Anspruch 11 ist das mindestens eine Gegeneingriffselement an einer türfesten Komponente angeordnet. Damit lässt sich eine besonders einfache Umsetzung der vorschlagsgemäßen Lösung realisieren, beispielsweise, indem der Befestigungsschieber von dem Griffmodul ausgebildet ist (Anspruch 12). Der konstruktiv übersichtliche Aufbau wird dadurch "erkauft", dass das Griffmodul zusammen mit dem Befestigungsschieber gleichzeitig Bewegungsanteile in der Montagerichtung und in der Zustellrichtung vollzieht.

Eine Bewegung des Griffmoduls ausschließlich in der Zustellrichtung ergibt sich gemäß Anspruch 13, was besonders vorteilhaft im Hinblick auf das eventuelle Zusammenwirken des Griffmoduls mit einer zwischengeschalteten Dichtung ist. Grundsätzlich kann es aber auch, wie in Anspruch 14 vorgeschlagen, vorgesehen sein, dass das Gegeneingriffselement am Griffmodul angeordnet ist, so dass für das vorschlagsgemäße Verspannen eine separate Abstützung des Befestigungsschiebers an der Kraftfahrzeugtür erforderlich ist. Dies wird gemäß Anspruch 14 durch eine entsprechende Längsführung des Befestigungsschiebers an der Türaußenhaut oder einem der Türaußenhaut zugeordneten Tür-Strukturelement realisiert. Die Längsführung des Befestigungsschiebers kann beispielsweise dadurch realisiert sein, dass der Befestigungsschieber in die Griffausnehmung der Türaußenhaut im Rahmen der Vormontage der Türgriffeinheit eingehängt wird.

Nach einer weiteren Lehre gemäß Anspruch 15 wird ein Montagemodul für eine Kraftfahrzeugtür als solches beansprucht.

Das vorschlagsgemäße Montagemodul weist einen Montagemodulträger auf, an dem mindestens zwei Funktionskomponenten befestigt sind. Das Montagemodul ist zusammen mit den Funktionskomponenten in oder an der Kraftfahrzeugtür montierbar. Vorschlagsgemäß ist es so, dass eine der Funktionskomponenten als vorschlagsgemäße Türgriffeinheit ausgestaltet ist. Auf alle die Türgriffeinheit betreffenden Erläuterungen darf verwiesen werden.

Die vorschlagsgemäße Türgriffeinheit lässt sich besonders vorteilhaft in Zusammenhang mit einem Montagemodul gemäß Anspruch 16 anwenden, das im in oder an die Kraftfahrzeugtür ein- oder angesetzten Zustand den Zugang zu der Türgriffeinheit versperrt. Dieses Versperren ist vorschlagsgemäß aber unproblematisch, da die Endmontage der Türgriffeinheit ja von der Schmalseite der Kraftfahrzeugtür aus möglich ist.

Nach einer weiteren Lehre gemäß Anspruch 18 wird eine Kraftfahrzeugtür mit einer erfindungsgemäßen Türgriffeinheit und/oder einem vorschlagsgemäßen Montagemodul als solche beansprucht. Auch insoweit darf auf alle Ausführungen zu der vorschlagsgemäßen Türgriffeinheit sowie zu dem vorschlagsgemäßen Montagemodul verwiesen werden.

Nach einer weiteren Lehre gemäß Anspruch 19, der eigenständige Bedeutung zukommt, wird ein Verfahren zur Montage einer vorschlagsgemäßen Türgriffeinheit an einer Kraftfahrzeugtür als solches beansprucht.

Wesentlich ist ganz allgemein, dass die Türgriffeinheit von der Türinnenseite aus vormontiert wird und anschließend durch die Befestigungsbewegung des Befestigungsschiebers endmontiert wird. Auch insoweit darf auf alle Ausführungen zu der vorschlagsgemäßen Türgriffeinheit und dem vorschlagsgemäßen Montagemodul verwiesen werden.

Besonders bemerkenswert ist auch im Hinblick auf das vorschlagsgemäße Verfahren der Einsatz eines Montagemoduls, das, wie oben angesprochen, den Zugang zu der Türgriffeinheit versperrt (Anspruch 21). Angesichts der vorschlagsgemäßen Endmontage über die Schmalseite der Kraftfahrzeugtür ist dies wiederum unproblematisch.

Im Folgenden wird die Erfindung anhand einer lediglich Ausführungsbeispiele darstellenden Zeichnung näher erläutert. In der Zeichnung zeigt
- Fig. 1: a) eine perspektivische Ansicht einer vorschlagsgemäßen Kraftfahrzeugtür mit einer vorschlagsgemäßen Türgriffeinheit und
b) eine Explosionsdarstellung zu a),
- Fig. 2: a) eine ausschnittsweise, perspektivische Ansicht der Kraftfahrzeugtür gemäß Fig. 1a) von Außen bei endmontierter Türgriffeinheit und
b) eine Explosionsansicht zu a),
- Fig. 3: a) eine ausschnittsweise, perspektivische Ansicht der Kraftfahrzeugtür gemäß Fig. 1a) von Innen bei vormontierter Türgriffeinheit,
b) eine schematisierte Schnittansicht entlang der Schnittlinie b-b bei vormontierter Türgriffeinheit und
c) die Schnittansicht gemäß b) bei endmontierter Türgriffeinheit,
- Fig. 4: a) eine ausschnittsweise, perspektivische Ansicht der Kraftfahrzeugtür gemäß Fig. 1a) von Innen bei vormontierter Türgriffeinheit gemäß einem zweiten Ausführungsbeispiel,
b) eine schematisierte Schnittansicht entlang der Schnittlinie b-b bei vormontierter Türgriffeinheit und
c) die Schnittansicht gemäß b) bei endmontierter Türgriffeinheit,
- Fig. 5: a) eine ausschnittsweise, perspektivische Ansicht der Kraftfahrzeugtür gemäß Fig. 1a) von Innen bei vormontierter Türgriffeinheit gemäß einem dritten Ausführungsbeispiel,
b) eine schematisierte Schnittansicht entlang der Schnittlinie c-c vor der Vormontage der Türgriffeinheit
c) die Schnittansicht gemäß b) bei vormontierter Türgriffeinheit,
d) eine schematisierte Schnittansicht entlang der Schnittlinie d-d bei vormontierter Türgriffeinheit und
e) die Schnittansicht gemäß d) bei endmontierter Türgriffeinheit.

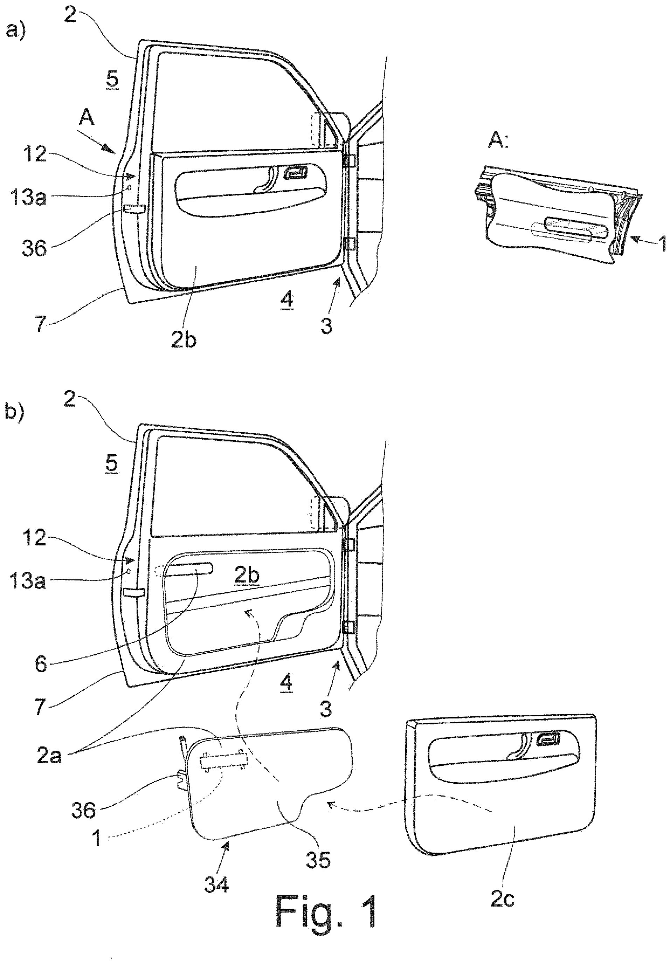

Die vorschlagsgemäße Türgriffeinheit 1 ist einer Kraftfahrzeugtür 2 zugeordnet. Der Begriff 3Kraftfahrzeugtür" ist vorliegend weit zu verstehen. Er umfasst Seitentüren, Hecktüren, Heckklappen, Heckdeckel o.dgl. Die Kraftfahrzeugtür kann, wie in Fig. 1a) dargestellt, als Schwenkflügeltür, die über eine Scharnieranordnung 3 schwenkbar ist, oder als verschiebbare Schiebetür ausgestaltet sein.

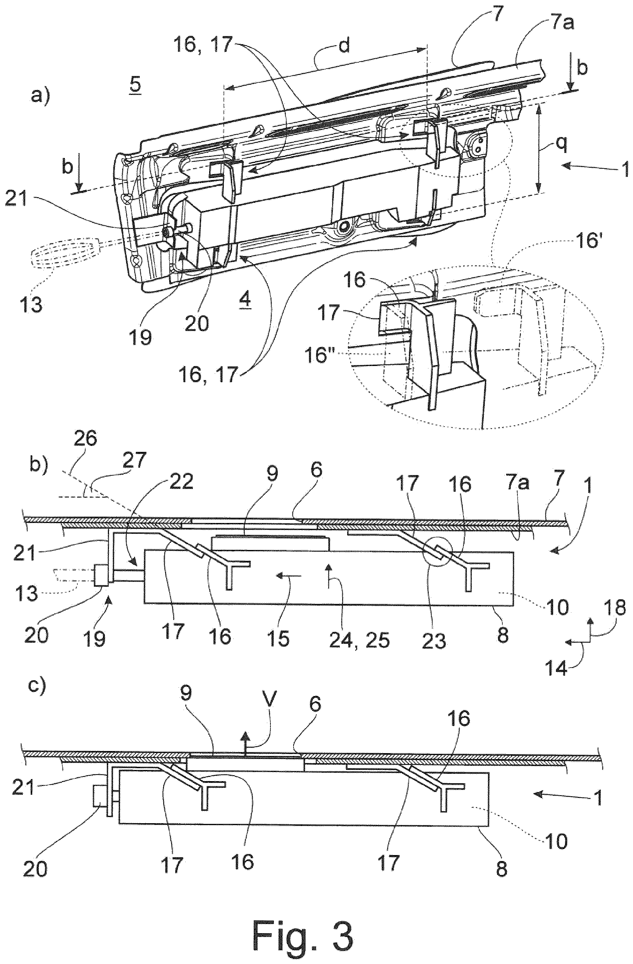

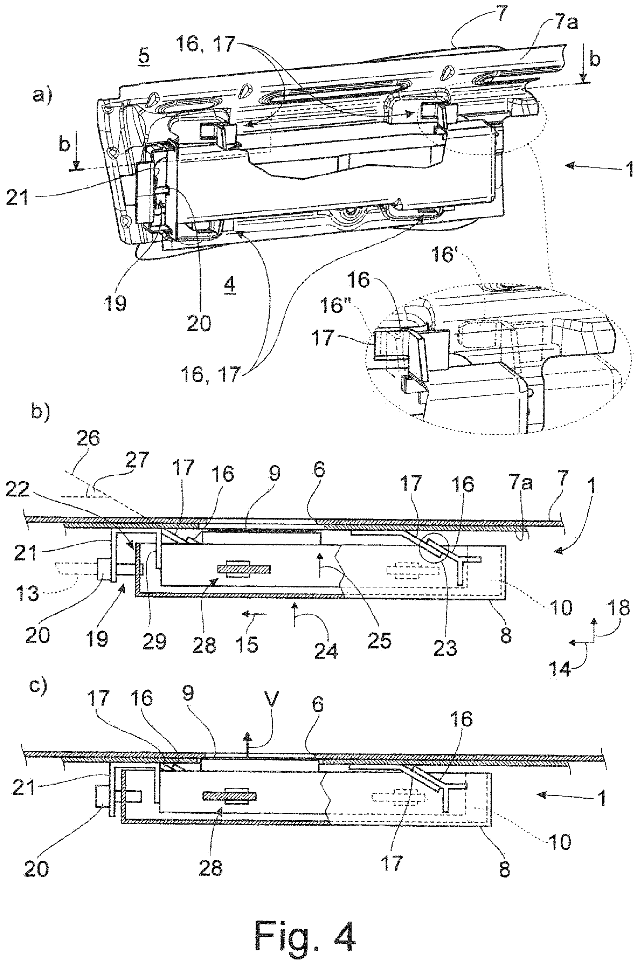

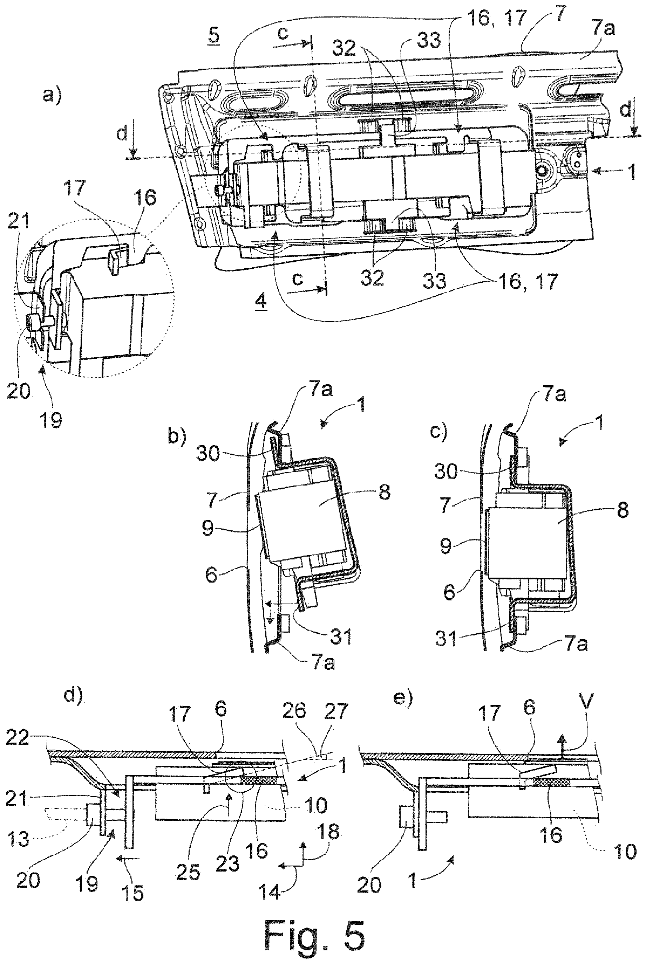

Die vorschlagsgemäße Lösung ist in den Fig. 1 bis 3, in Fig. 4 und in Fig. 5 in insgesamt drei Ausführungsbeispielen dargestellt. Die Darstellungen in den Fig. 3a), 4a) und 5a)-c) zeigen das jeweilige Ausführungsbeispiel in allen konstruktiven Details, während die Darstellungen in den Fig. 3b), 3c) und 4b), 4c) und 5d), 5e) zur Vereinfachung schematisiert worden sind. Dadurch, dass die Ausführungsbeispiele in weiten Teilen ähnlich strukturiert sind, zeigen die Figuren für funktionsgleiche Komponenten identische Bezugszeichen. Entsprechend gelten diesbezügliche Erläuterungen für alle Ausführungsbeispiele analog.

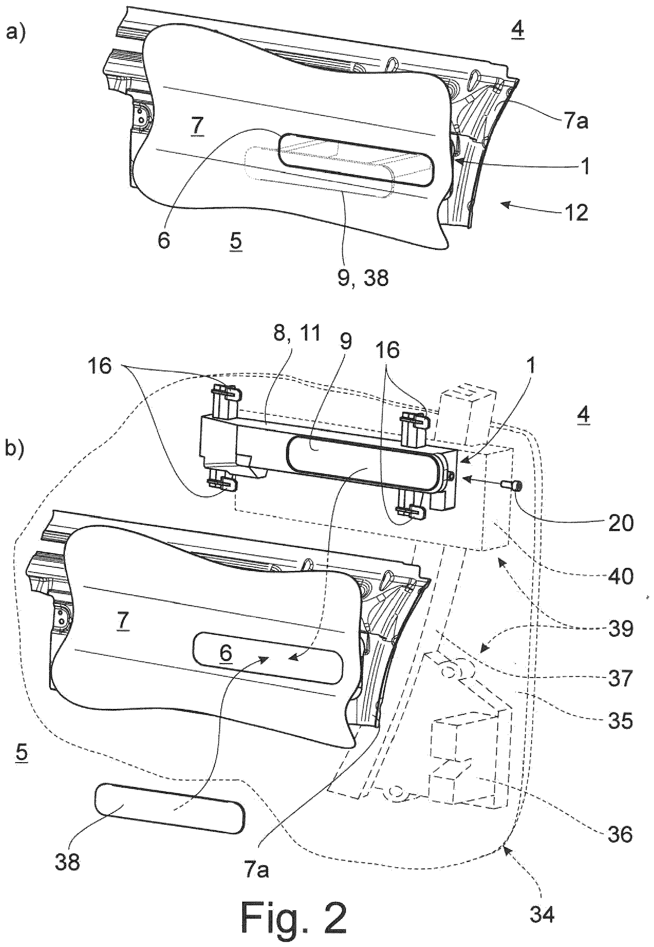

Für die Montage der Türgriffeinheit 1 an der Kraftfahrzeugtür 2 sind verschiedene vorteilhafte Varianten denkbar. Allen dargestellten Varianten ist gemein, dass die Türgriffeinheit 1 als solche von der Türinnenseite 4 aus, und nicht von der Türaußenseite 5 aus, an einer Griffausnehmung 6 der Türaußenhaut 7 der Kraftfahrzeugtür 2 montiert wird. Dabei ist, wie der Darstellung gemäß Fig. 2a) zu entnehmen ist, eine Montage der Türgriffeinheit 1 vorzugsweise bündig oder zurückspringend gegenüber der Türaußenhaut 7 vorgesehen.

Fig. 2b) zeigt, dass die Türgriffeinheit 1 ein Griffmodul 8 und ein von dem Griffmodul 8 aufgenommenes, hier und vorzugsweise längliches, Griffteil 9 aufweist. Das Griffmodul 8 weist einen nicht näher gezeigten Mechanismus 10 zur motorischen Verstellung des Griffteils 9 auf. Der Begriff "motorisch" ist vorliegend weit zu verstehen. Er umfasst jegliche Verstellung des Griffteils 9 mittels eines irgendwie gearteten, insbesondere elektrischen, Aktuators.

Durch den Mechanismus 10 ist das Griffteil 9 hier und vorzugsweise zwischen einer in Fig. 2a) in durchgezogener Linie dargestellten Parkstellung und einer in Fig. 2a) in gestrichelter Linie dargestellten Betätigungsstellung verstellbar. In der Parkstellung ist das Griffteil 9 bündig oder zurückspringend gegenüber der Türaußenhaut 7 angeordnet, während das Griffteil 9 in der Betätigungsstellung von der Türaußenhaut 7 abragt und somit von der Hand eines Benutzers gegriffen werden kann.

Mit der Montage der Türgriffeinheit 1 "als solcher" ist gemeint, dass die Türgriffeinheit 1 als Baugruppe, umfassend das Griffmodul 8 und das Griffteil 9, von der Türinnenseite 4 montierbar ist. Wesentlich dabei ist, dass diese Baugruppe von der Türinnenseite 4 aus montiert wird.

Wie beispielsweise in Fig. 3b) für das erste Ausführungsbeispiel, in 4b) für das zweite Ausführungsbeispiel und in Fig. 5d) für das dritte Ausführungsbeispiel zu erkennen ist, lässt sich die Türgriffeinheit 1 an der Kraftfahrzeugtür 2 vormontieren. Damit ist gemeint, dass die Türgriffeinheit 1 an der Kraftfahrzeugtür 2 vorpositioniert und vorzugsweise selbsthaltend angeordnet ist.

Wesentlich ist nun, dass die Türgriffeinheit 1 einen Befestigungsschieber 11 aufweist, der bei vormontierter Türgriffeinheit 1 mit dem Griffmodul 8 einerseits und der Kraftfahrzeugtür 2 andererseits gekoppelt ist. Auch dies lässt sich am besten den Darstellungen gemäß Fig. 3b), 4b) und 5d) entnehmen.

Bei den dargestellten und insoweit bevorzugten Ausführungsbeispielen ist der Türgriffeinheit 1 nur ein einziger Befestigungsschieber 11 zugeordnet. Grundsätzlich können der Türgriffeinheit 1 auch zwei oder mehrere Befestigungsschieber 11 zugeordnet sein. Alle Ausführungen zu dem einen Befestigungsschieber 11 gelten für weitere, eventuell vorgesehene Befestigungsschieber entsprechend.

Wesentlich ist weiter, dass zur Endmontage der Türgriffeinheit 1 von einer Schmalseite 12 der Kraftfahrzeugtür 2 aus mittels eines Werkzeugs 13 eine hier und vorzugsweise lineare Montagebewegung 15 in einer Montagerichtung 14 in den Befestigungsschieber 11 einleitbar ist. Hier und vorzugsweise ist an der Kraftfahrzeugtür 2, hier an der Schmalseite 12 der Kraftfahrzeugtür 2, eine Werkzeugöffnung 13a vorgesehen, durch die das Werkzeug 13 hindurchgeführt werden kann.

Bei der Schmalseite 12 handelt es sich hier und vorzugsweise um die Schmalseite der Kraftfahrzeugtür 2, die der Scharnieranordnung 3 gegenüberliegt. Die Endmontage ergibt sich für das erste Ausführungsbeispiel aus dem Übergang von Fig. 3b) auf Fig. 3c), für das zweite Ausführungsbeispiel aus dem Übergang von Fig. 4b) auf Fig. 4c) und für das dritte Ausführungsbeispiel aus dem Übergang von Fig. 5d) auf Fig. 5e). In den Detailansichten der Fig. 3a) und 4a) ist das dortige Eingriffselement in einer der Vormontage vorgelagerten Situation mit dem Bezugszeichen 16' und in der Endmontagesituation mit dem Bezugszeichen 16", jeweils in gestrichelter Linie, dargestellt.

Bei allen drei Ausführungsbeispielen weist der Befestigungsschieber 11 mindestens ein Eingriffselement 16 auf, das eingerichtet ist, im Rahmen der Endmontage mit einem Gegeneingriffselement 17 wechselzuwirken und aus der Montagebewegung eine Verspannung des Griffmoduls 8 mit der Türaußenhaut 7 zu erzeugen, wobei die Verspannung der Befestigung des Griffmoduls 8 an der Kraftfahrzeugtür 2 dient. Die Verspannung kann grundsätzlich auch zwischen dem Griffmodul 8 und einem der Türaußenhaut 7 zugeordneten Tür-Strukturelement 7a vorgesehen sein. Es lässt sich den Darstellungen gemäß den Fig. 3 bis 5 entnehmen, dass die resultierende Verspannkraft V quer zu der Türaußenhaut 7, hier auch quer zu der Montagerichtung 14, ausgerichtet ist.

Um eine gleichmäßige Verspannung des Griffmoduls 8 mit der Türaußenhaut 7 zu erreichen, sind in allen Ausführungsbeispielen mehrere, hier und vorzugsweise vier, oben erläuterte Eingriffselemente 16 mit jeweils zugeordneten Gegeneingriffselementen 17 vorgesehen.

Ganz allgemein ist es so, dass der Befestigungsschieber 11 mindestens zwei separate Eingriffselemente 17 aufweist, die bezogen auf die Montagerichtung 14 voneinander beabstandet sind und die eingerichtet sind, im Rahmen der Endmontage mit Gegeneingriffselementen 17 wechselzuwirken und aus der Montagebewegung eine Verspannung des Griffmoduls 8 mit der Türaußenhaut 7 oder einem der Türaußenhaut 7 zugeordneten Tür-Strukturelement zu erzeugen. Ein solcher Abstand zwischen zwei Eingriffselementen 16 ist in Fig. 3a) beispielhaft mit dem Bezugszeichen "d" angedeutet.

Ferner ist es vorzugsweise vorgesehen, dass der Befestigungsschieber 11 mindestens zwei separate, oben erläuterte Eingriffselemente 16 aufweist, die bezogen auf eine Querrichtung 18, die quer zu der Montagerichtung 14 ausgerichtet ist, beabstandet voneinander angeordnet sind. Ein solcher Abstand zwischen Eingriffselementen 16 ist in Fig. 3a) beispielhaft mit dem Bezugszeichen "q" angedeutet.

Bei allen dargestellten und insoweit bevorzugten Ausführungsbeispielen ist es so, dass der Befestigungsschieber 11 vier Eingriffsetemente 16 aufweist, die paarweise bezogen auf das längliche Griffteil 9 gegenüberliegend angeordnet sind. Grundsätzlich können auch mehr als vier Eingriffselemente 16 vorgesehen sein, die entsprechend paarweise bezogen auf das längliche Griffteil 9 gegenüberliegend angeordnet sind.

Ein Blick auf die drei Ausführungsbeispiele verrät weiter, dass der Befestigungsschieber 11 als formstabile, insbesondere als starre, Komponente ausgestaltet ist. Dies bedeutet, dass sich die Montagebewegung 15 wie oben angesprochen ohne weitere konstruktive Maßnahmen auf alle Eingriffselemente 16 fortsetzt. Eine hohe mechanische Stabilität bei geringem Fertigungsaufwand lässt sich dadurch erreichen, dass der Befestigungsschieber 11, wie in den Fig. 4 und 5 dargestellt, einstückig ausgestaltet ist. Hier und vorzugsweise ist der Befestigungsschieber 11 aus Metall, insbesondere Metallblech, ausgestaltet, wobei sich eine besonders einfache Fertigbarkeit dann ergibt, wenn es sich bei dem Befestigungsschieber 11 um ein Stanz-Biegeteil handelt. Alternativ kann es aber auch vorgesehen sein, dass der Befestigungsschieber 11 aus Kunststoff ausgestaltet ist, was eine Fertigung des Befestigungsschiebers 11 im Kunststoff-Spritzgießverfahren ermöglicht. Dies lässt sich kostengünstig und flexibel umsetzen.

Wie oben angesprochen, wird die Türgriffeinheit 1 im Rahmen der Vormontage vorzugsweise in selbsthaltender Weise vorpositioniert. Dies ist hier und vorzugsweise dadurch realisiert, dass die Türgriffeinheit 1 eingerichtet ist, zur Vormontage formschlüssig mit Spiel mit der Kraftfahrzeugtür 2 verbunden zu werden. Hier und vorzugsweise ist die Türgriffeinheit 1 eingerichtet, zur Vormontage in oder an die Kraftfahrzeugtür 2 gesteckt oder in die Kraftfahrzeugtür 2 eingehängt zu werden. Beide Varianten können über die Eingriffselemente 16 und Gegeneingriffselemente 17 oder über den Befestigungsschieber 11 realisiert sein. Denkbar ist aber auch, dass die Vormontage durch separate Halteelemente realisiert wird.

Bei den dargestellten und insoweit bevorzugten Ausführungsbeispielen ist eine Vorschubeinrichtung 19 zur Erzeugung der Montagebewegung vorgesehen, die von der oben angesprochenen Schmalseite 12 der Kraftfahrzeugtür 2 mittels des ebenfalls angesprochenen Werkzeugs 13 betätigbar ist. In einer besonders einfach zu realisierenden und hier dargestellten Variante weist die Vorschubeinrichtung 19 ein Schraubelement 20 auf, das von der Schmalseite 12 der Kraftfahrzeugtür 2 mittels des Werkzeugs 13 zugänglich ist und das bei vormontierter Türgriffeinheit 1 derart mit der Kraftfahrzeugtür 2 einerseits und mit dem Befestigungsschieber 11 andererseits gekoppelt ist, das eine Schraubbewegung des Schraubelements 20 die Montagebewegung 15 erzeugt. Hier und vorzugsweise ist es so, dass die Montagerichtung 14 entlang der Türaußenhaut 7 verläuft.

Im Einzelnen ist bei den dargestellten Ausführungsbeispielen eine türfeste Abstützung 21 für das Schraubelement 20 vorgesehen, in der das Schraubelement 20 drehbar, jedoch axial festgehalten wird. Zusätzlich steht das Schraubelement 20 mit einem an den Befestigungsschieber 11 angeordneten Gewindeelement 22 in kämmendem Eingriff, so dass mit einer Schraubbewegung des Schraubelements 20 der Befestigungsschieber 11 zu der Abstützung 21 hin gezogen wird. Die Abstützung 21 ist in allen drei Ausführungsbeispielen nicht unmittelbar an der Türaußenhaut 7 befestigt, sondern an einem der Türaußenhaut 7 zugeordneten Strukturelement 7a.

Wiederum bei allen drei dargestellten Ausführungsformen ist es so, dass die Eingriffselemente 16 zusammen mit den Gegeneingriffselementen 17 jeweils einen Umlenkmechanismus 23 bereitstellen, der als Reaktion auf die Montagebewegung 15 eine Zustellbewegung 24, 25 erzeugt. Bei den in den Fig. 3 und 4 dargestellten Ausführungsbeispielen wird die dortige Zustellbewegung 24 sowohl in den Befestigungsschieber 11 als auch in das Griffmodul 8 eingeleitet. Bei dem in Fig. 5 dargestellten Ausführungsbeispiel dagegen wird die dortige Zustellbewegung 25 ausschließlich in das Griffmodul 8 eingeleitet, während sich der Befestigungsschieber 11 ausschließlich in der Montagerichtung 14 bewegt.

Wie in den Fig. 3, 4 und 5 dargestellt, ist eine Wechselwirkung zwischen den Eingriffselementen 16 und den Gegeneingriffselementen 17 zur Erzeugung der jeweiligen Zustellbewegung 24, 25 nach Art eines Keilgetriebes vorgesehen. Dies liegt daran, dass die gemeinsame Tangentialebene 26 zwischen Eingriffselement 16 und Gegeneingriffselement 17 gegenüber der Montagerichtung 14 unter einem Anstellwinkel 27 angestellt ist.

Der Wechselwirkung zwischen den Eingriffselementen 16 und den Gegeneingriffselementen 17 kommt vorliegend eine doppelte Bedeutung zu. Einerseits ist es bei den dargestellten und insoweit bevorzugten Ausführungsbeispielen vorgesehen, dass die Vormontage der Türgriffeinheit 1 an der Kraftfahrzeugtür 2 auf die Wechselwirkung zwischen den Eingriffselementen 16 und den Gegeneingriffselementen 17 zurückgeht. Andererseits soll diese Wechselwirkung zwischen den Eingriffselementen 16 und den Gegeneingriffselementen 17 einen oben angesprochenen Umlenkmechanismus 23 erzeugen. Beide Funktionen lassen sich in besonders einfacher Weise dadurch realisieren, dass die Eingriffselemente 16 und die zugeordneten Gegeneingriffselemente 17 sowohl zur Vormontage als auch zur Endmontage, also während der in den Befestigungsschieber 11 eingeleiteten Montagebewegung 15, paarweise ineinander eintauchen. Hierfür sind die Eingriffselemente 16 vorzugsweise als Haltelaschen und die Gegeneingriffselemente 17 vorzugsweise als Haltetaschen ausgestaltet, wobei die Haltelaschen in die Haltetaschen eintauchen. Dies kann auch umgekehrt vorgesehen sein.

Den Darstellungen gemäß den Fig. 3 und 4 lässt sich weiter entnehmen, dass die Gegeneingriffselemente 16 jeweils an einer türfesten Komponente, insbesondere an der Türaußenhaut 7, oder, wie hier, an einem der Türaußenhaut 7 zugeordneten Tür-Strukturelements 7a, angeordnet sind, so dass der Umlenkmechanismus 23 in den Befestigungsschieber 11 eine Zustellbewegung 24 auf die Türaußenhaut 7 zu einleitet. Dies zeigt der Übergang von Fig. 3b) auf Fig. 3c) für das erste Ausführungsbeispiel sowie von Fig. 4b) auf Fig. c) für das zweite Ausführungsbeispiel.

Dadurch, dass bei dem in Fig. 3 dargestellten Ausführungsbeispiel die Kopplung des Befestigungsschiebers 11 mit dem Griffmodul 8 darauf zurückgeht, dass der Befestigungsschieber 11 von dem Griffmodul 8 ausgebildet ist, entspricht die Zustellbewegung 24 auf den Befestigungsschieber 11 der Zustellbewegung 25 auf das Griffmodul 8. Sowohl der Befestigungsschieber 11 als auch das Griffmodul 8 vollziehen eine Bewegung, die neben dem Bewegungsanteil in der Montagerichtung 14 auch einen Bewegungsanteil in der Zustellrichtung aufweist.

Anders ist es bei dem in Fig. 4 dargestellten, zweiten Ausführungsbeispiel. Hier ist es so, dass die Kopplung des Befestigungsschiebers 11 mit dem Griffmodul 8 auf eine Längsführung des Griffmoduls 8 an dem Befestigungsschieber 11 zurückgeht, die entlang der Montagerichtung 14 ausgerichtet ist. Die Längsführung wird hier und vorzugsweise durch eine in Fig. 4 lediglich angedeutete Längsführungseinheit 28 realisiert. Dadurch, dass hier und vorzugsweise das Griffmodul 8 in der Montagerichtung 14 durch das Blockierelement 29 blockiert ist, kann das Griffmodul 8 lediglich der Zustellbewegung 24 des Befestigungsschiebers 11 folgen, so dass die Zustellbewegung 25 des Griffmoduls 8, wie oben angesprochen, der Zustellbewegung 24 des Befestigungsschiebers 11 entspricht. Der Übergang von Fig. 4b) auf Fig. 4c) zeigt besonders deutlich, dass die Zustellbewegung 25 des Griffmoduls 8 keinen Bewegungsanteil in der Montagerichtung 14 aufweist, was insbesondere für die Kraftbeaufschlagung einer eventuell zwischen das Griffmodul 8 und die Kraftfahrzeugtür 2 zwischengeschalteten Dichtung vorteilhaft sein kann.

Während bei dem in Fig. 5 dargestellten, dritten Ausführungsbeispiel ebenfalls ein Umlenkmechanismus 23 im obigen Sinne realisiert ist, führt der dortige, spezielle Eingriff des Befestigungsschiebers 11 mit der Kraftfahrzeugtür 2 zu einer abweichenden Funktionsweise. Demnach ist der Befestigungsschieber 11 bei vormontierter Türgriffeinheit 1 entlang eines der Türaußenhaut 7 zugeordneten Tür-Strukturelements 7a längsgeführt, so dass sich eine Längsführung entlang der Türaußenhaut 7 ergibt. Die Verschiebbarkeit des Befestigungsschiebers 11 entlang des Tür-Strukturelements 7a ergibt sich aus einer Zusammenschau von Fig. 5d) und Fig. 5e).

Die Längsführung des Befestigungsschiebers 11 an dem Tür-Strukturelement 7a resultiert bei dem dritten Ausführungsbeispiel, wie in Fig. 5c) gezeigt, daraus, dass der Befestigungsschieber 11 im Querschnitt quer zu der Montagerichtung 14 gesehen zwei Schenkel 30, 31 aufweist, die das hier und vorzugsweise parallel zu der Türaußenhaut 7 verlaufende Tür-Strukturelement 7a, hintergreifen. Die Längsführung lässt sich, wie aus dem Übergang von Fig. 5b) auf Fig. 5c) hervorgeht, durch ein Einhängen des Befestigungsschiebers 11 in das Tür-Strukturelement 7a erzeugen. Dadurch, dass der in Fig. 5b) obere Schenkel 30 länger als der untere Schenkel 31 ausgestaltet ist, lässt sich das Einhängen durch eine in Fig. 5b) angedeutete Schwenk-Schiebebewegung auf einfache Weise umsetzen. Dieses Einhängen des Befestigungsschiebers 11 in das Tür-Strukturelement 7a entspricht gleichzeitig der oben angesprochenen Vormontage der Türgriffeinheit 1 an der Kraftfahrzeugtür 2.

Wesentlich bei dem in Fig. 5 dargestellten Ausführungsbeispiel ist, dass die Gegeneingriffselemente 17 am Griffmodul 8 angeordnet sind. Dadurch, dass das Griffmodul 8 wie noch zu erläutern in der Montagerichtung 14 blockiert ist, kann das Griffmodul 8 der Bewegung des Befestigungsschiebers 11 in der Montagerichtung 14 nicht folgen, so dass über den Umlenkmechanismus 23 ausschließlich die Zustellbewegung 25 in das Griffmodul 8 eingeleitet wird. Vorteilhaft ist auch hier im Hinblick auf eventuell zwischengeschaltete Dichtungen, dass das Griffmodul 8 im Ergebnis quer zu der Türaußenhaut 7 bewegt wird. Für die obige Blockierung des Griffmoduls 8 in der Montagerichtung 14 ist eine türfeste Blockieranordnung 32, die mit einem an dem Griffmodul 8 angeordneten Blockierelement 33 zusammenwirkt, vorgesehen.

Es darf zusammengefasst werden, dass mit der vorschlagsgemäßen Lösung eine Befestigung des Griffmoduls 8 an der Kraftfahrzeugtür 2 von der Türinnenseite 4 aus erreicht wird, ohne dass eine Befestigung von der Türaußenseite 5 aus erfolgen muss. Eine Befestigung des Griffmoduls 8 von der Türaußenseite 5 aus ist also vorzugsweise nicht vorgesehen, was zu einer besonders hohen Freiheit bei der Formgestaltung des Griffmoduls 8 führt.

Nach einer weiteren Lehre wird ein Montagemodul 34 für eine Kraftfahrzeugtür 2 mit einem Montagemodulträger 35 und mindestens zwei an dem Montagemodulträger 35 befestigten Funktionskomponenten als solches beansprucht. Eine der Funktionskomponenten ist dabei eine erfindungsgemäße Türgriffeinheit.

Ganz allgemein weist das Montagemodul 34 einem Montagemodulträger 35 auf, an dem mindestens zwei Funktionskomponenten befestigt sind. Der Begriff "befestigt" ist weit auszulegen und umfasst sowohl eine starre Verbindung als auch eine lose Verbindung. Das Montagemodul 34 ist zusammen mit den Funktionskomponenten in oder an der Kraftfahrzeugtür 2 montierbar, was einen vereinfachten Montagevorgang, aber auch die Testbarkeit der am Montagemodul 34 befestigten Funktionskomponenten separat von der Kraftfahrzeugtür 2 ermöglicht.

Nach der weiteren Lehre ist eine der Funktionskomponenten des Montagemoduls 34 als erfindungsgemäße Türgriffeinheit 1 ausgestaltet. Insoweit darf auf die obigen Ausführungen zu der vorschlagsgemäßen Türgriffeinheit 1 verwiesen werden.

Ein obiges Montagemodul 34 ist in den Fig. 1b) und 2b) angedeutet. An dem Montagemodulträger 35 sind ein Kraftfahrzeugschloss 36, eine Fensterführungsschiene 37 sowie eine vorschlagsgemäße Türgriffeinheit 1 angeordnet. Andere mit dem Montagemodul 34 verbundene Funktionskomponenten wie ein Fensterheber, eine Lautsprecheranordnung o. dgl. sind denkbar. Das Montagemodul 34 wird als solches von der Türinnenseite 4 aus in oder an die Kraftfahrzeugtür 2 ein- oder angesetzt. Alle oben angesprochenen Komponenten können damit von dem Montagemodul 34, insbesondere von dem Montagemodulträger 35, im Rahmen der Montage zusammen mit dem Montagemodulträger 35 gehandhabt werden.

Hier und vorzugsweise weist die Kraftfahrzeugtür 2 eine Nass-Trockenraum-Trennung 2a auf, die einen Nassraum von einem Trockenraum trennt. Der Nassraum wird vorzugsweise von einem Hohlraum in der Kraftfahrzeugtür 2 gebildet, in dem sich vorzugsweise die Türgriffeinheit 1 in ihrem endmontierten Zustand befindet. Bei dem in Fig. 1 dargestellten und insoweit bevorzugten Ausführungsbeispiel wird der Trockenraum durch eine Türinnenverkleidung 2c abgeschlossen.

Fig. 1 b) zeigt, dass das Montagemodul 34 im endmontierten Zustand eine Öffnung 2b in der von einem Türinnenblech gebildeten Nass-Trockenraum-Trennung 2a verschließt. Alternativ kann es vorgesehen sein, dass die Nass-Trockenraum-Trennung 2a allein von dem Montagemodul 34 ausgebildet wird. Vorzugsweise ist es so, dass das Verschließen der Öffnung 2b in der Nass-Trockenraum-Trennung 2a bzw. die Herstellung der Nass-Trockenraum-Trennung 2a mit der Vormontage der Türgriffeinheit 1 einhergeht.

Fig. 2 zeigt, dass hier und vorzugsweise das Montagemodul 34 ein weiteres Montagemodul 39 trägt, das einen weiteren Montagemodulträger 40 aufweist, der das Kraftfahrzeugschloss 36 und die Türgriffeinheit 1 trägt.

Bei dem Montagemodul 34, das die Öffnung 2b verschließt, handelt es sich um ein sogenannten Türmodul, während es sich bei dem weiteren Montagemodul 39 um ein sogenanntes Schlossmodul handelt. Das Schlossmodul trägt vorzugsweise das Kraftfahrzeugschloss 36 und ggf. die Türgriffeinheit 1. Ein solches Schlossmodul kann grundsätzlich, wie hier, mit Türmodulanbindung vorgesehen sein, oder eben als solches ohne Türmodul Einsatz finden. Insoweit sind der flexiblen Auslegung der Kraftfahrzeugtür 2 nahezu keine Grenzen gesetzt.

Nach einer weiteren Lehre wird eine Kraftfahrzeugtür 2 mit einer erfindungsgemäßen Türgriffeinheit 1 und/oder mit einem vorschlagsgemäßen Montagemodul 34 als solche beansprucht.

In einer bevorzugten Ausgestaltung entspricht die Außenform des Griffteils 9, insbesondere in seiner Parkposition, bis auf einen Spalt der Form der Griffausnehmung 6 der Türaußenhaut 7, wobei die Breite des Spalts vorzugsweise weniger als 5 mm, weiter vorzugsweise weniger als 2 mm, beträgt.

Es darf noch darauf hingewiesen werden, dass die oben angesprochene, bündige Anordnung des Griffteils 9 an der Türaußenhaut 7 vorbehaltlich einer dünnen Blende 38 vorgesehen sein kann, die nachträglich von der Türaußenseite 5 auf das Griffteil 9 aufgesetzt werden kann. Diese nachträgliche Befestigung der Blende 38 an dem Griffteil 9 ist insoweit vorteilhaft, als es dadurch möglich ist, an dem Griffteil 9 Montageausformungen, insbesondere Montageöffnungen vorzusehen, über die das Griffteil 9 von der Türaußenseite 5 aus im Rahmen der Vormontage der Türgriffeinheit 1 geführt werden kann. Dies vereinfacht beispielsweise das oben angesprochene Einfädeln der Eingriffselemente 16 in die zugeordneten Gegeneingriffselemente 17.

Nach einer weiteren Lehre, der eigenständige Bedeutung zukommt, wird das Verfahren zur Montage einer erfindungsgemäßen Türgriffeinheit 1 an einer Kraftfahrzeugtür als solches beansprucht.

Wesentlich nach dem vorschlagsgemäßen Verfahren ist, dass die Türgriffeinheit 1 von der Türinnenseite 4 aus an der Kraftfahrzeugtür 2 vormontiert und anschließend durch Einleitung der Montagebewegung in den Befestigungsschieber 11 endmontiert wird. Im Einzelnen ist es vorzugsweise so, dass im Rahmen der Vormontage der Türgriffeinheit 1 an der Kraftfahrzeugtür 2 die Eingriffselemente 16 in Eingriff mit den Gegeneingriffselementen 17 gebracht werden. Anschließend wird zur Endmontage der Türgriffeinheit 1 von einer Schmalseite 12 der Kraftfahrzeugtür 2 aus mittels eines Werkzeugs 13 eine Montagebewegung 15 in einer Montagerichtung 14 in den Befestigungsschieber 11 eingeleitet. Weiter vorzugsweise ist es so, dass die Eingriffselemente 16 eingerichtet sind, im Rahmen der Endmontage mit Gegeneingriffselementen 17 wechselzuwirken und aus der Montagebewegung eine Verspannung des Griffmoduls 8 mit der Türaußenhaut 7 oder einem der Türaußenhaut 7 zugeordneten Tür-Strukturelement 7a zu erzeugen. Auf alle obigen Ausführungen, die geeignet sind, das vorschlagsgemäße Verfahren zu erläutern, darf verwiesen werden.

Bei Verwendung eines obigen Montagemoduls 34 ist es vorzugsweise vorgesehen, dass die Türgriffeinheit 1 zunächst an dem Montagemodul 34, insbesondere an einem Türmodul oder an einem Schlossmodul, befestigt wird, bevor die an dem Montagemodul 34 befestigte Türgriffeinheit 1 zusammen mit dem Montagemodul 34 an der Kraftfahrzeugtür 2 vormontiert wird.

Weiter vorzugsweise ist es so, dass die Kraftfahrzeugtür 2 eine oben angesprochene Nass-Trockenraum-Trennung 2a aufweist, die einen Nassraum von einem Trockenraum trennt, dass die Vormontage und die Endmontage der Türgriffeinheit 1 im Nassraum stattfindet und dass im Zuge der Vormontage der Türgriffeinheit 1 eine Öffnung 2b in der Nass-Trockenraum-Trennung 2a der Kraftfahrzeugtür 2 durch das Montagemodul 34 verschlossen wird und/oder die Nass-Trockenraum-Trennung von dem Montagemodul 34 ausgebildet wird. Auf alle obigen, diesbezüglichen Ausführungen darf verwiesen werden.

## Patentansprüche

1. Türgriffeinheit für eine Kraftfahrzeugtür (2), die als solche von der Türinnenseite (4) aus an einer Griffausnehmung (6) der Türaußenhaut (7) der Kraftfahrzeugtür (2), insbesondere bündig oder zurückspringend gegenüber der Türaußenhaut (7), montierbar ist, wobei die Türgriffeinheit (1) ein Griffmodul (8) und ein von dem Griffmodul (8) aufgenommenes, insbesondere längliches Griffteil (9) aufweist, wobei das Griffmodul (8) einen Mechanismus zur motorischen Verstellung des Griffteils (9) aufweist, wobei die Türgriffeinheit (1) an der Kraftfahrzeugtür (2) vormontierbar ist,
**dadurch gekennzeichnet,**
**dass** die Türgriffeinheit (1) einen Befestigungsschieber (11) aufweist, der bei vormontierter Türgriffeinheit (1) mit dem Griffmodul (8) einerseits und der Kraftfahrzeugtür (2) andererseits gekoppelt ist, dass zur Endmontage der Türgriffeinheit (1) von einer Schmalseite (12) der Kraftfahrzeugtür (2) aus mittels eines Werkzeugs (13) eine Montagebewegung (15) in einer Montagerichtung (14) in den Befestigungsschieber (11) einleitbar ist, dass der Befestigungsschieber (11) mindestens ein Eingriffselement (16) aufweist, das eingerichtet ist, im Rahmen der Endmontage mit einem Gegeneingriffselement (17) wechselzuwirken und aus der Montagebewegung (15) eine Verspannung des Griffmoduls (8) mit der Türaußenhaut (7) oder einem der Türaußenhaut (7) zugeordneten Tür-Strukturelement (7a) zu erzeugen.

2. Türgriffeinheit nach Anspruch 1, **dadurch gekennzeichnet, dass** der Befestigungsschieber (11) mindestens zwei separate Eingriffselemente (16) aufweist, die bezogen auf die Montagerichtung (14) voneinander beabstandet sind und die eingerichtet sind, im Rahmen der Endmontage mit Gegeneingriffselementen (17) wechselzuwirken und aus der Montagebewegung (15) eine Verspannung des Griffmoduls (8) mit der Türaußenhaut (7) oder einem der Türaußenhaut (7) zugeordneten Tür-Strukturelement (7a) zu erzeugen.

3. Türgriffeinheit nach Anspruch 2, **dadurch gekennzeichnet, dass** der Befestigungsschieber (11) mindestens zwei separate Eingriffselemente (16) aufweist, die bezogen auf eine Querrichtung (18), die quer zu der Montagerichtung (14) ausgerichtet ist, beabstandet voneinander angeordnet sind und die eingerichtet sind, im Rahmen der Endmontage mit Gegeneingriffselementen (17) wechselzuwirken und aus der Montagebewegung (15) eine Verspannung des Griffmoduls (8) mit der Türaußenhaut (7) oder einem der Türaußenhaut (7) zugeordneten Tür-Strukturelement (7a) zu erzeugen, vorzugsweise, dass der Befestigungsschieber (11) mindestens vier Eingriffselemente (16) aufweist, die paarweise bezogen auf das längliche Griffteil (9) gegenüberliegend angeordnet sind und die eingerichtet sind, im Rahmen der Endmontage mit Gegeneingriffselementen (17) wechselzuwirken und aus der Montagebewegung (15) eine Verspannung des Griffmoduls (8) mit der Türaußenhaut (7) oder einem der Türaußenhaut (7) zugeordneten Tür-Strukturelement (7a) zu erzeugen,

4. Türgriffeinheit nach einem der vorhergehenden Ansprüche, **dadurch gekennzeichnet, dass** der Befestigungsschieber (11) als formstabile, insbesondere als starre, Komponente ausgestaltet ist, vorzugsweise, dass der Befestigungsschieber (11) einstückig ausgestaltet ist, weiter vorzugsweise, dass der Befestigungsschieber (11) aus Metall, insbesondere Metallblech, oder aus Kunststoff ausgestaltet ist.

5. Türgriffeinheit nach einem der vorhergehenden Ansprüche, **dadurch gekennzeichnet, dass** die Türgriffeinheit (1) eingerichtet ist, zur Vormontage formschlüssig mit Spiel mit der Kraftfahrzeugtür (2) verbunden zu werden, vorzugsweise, dass die Türgriffeinheit (1) eingerichtet ist, zur Vormontage in oder an die Kraftfahrzeugtür (2) gesteckt oder in die Kraftfahrzeugtür (2) eingehängt zu werden.

6. Türgriffeinheit nach einem der vorhergehenden Ansprüche, **dadurch gekennzeichnet, dass** eine Vorschubeinrichtung (19) zur Erzeugung der Montagebewegung (15) in der Montagerichtung (14) vorgesehen ist, die bei vormontierter Türgriffeinheit (1) von einer Schmalseite (12) der Kraftfahrzeugtür (2) mittels eines Werkzeugs (13) betätigbar ist, vorzugsweise, dass die Vorschubeinrichtung (19) ein Schraubelement (20) aufweist, das von der Schmalseite (12) der Kraftfahrzeugtür (2) mittels eines Werkzeugs (13) zugänglich ist und das bei vormontierter Türgriffeinheit (1) derart mit der Kraftfahrzeugtür (2) einerseits und mit dem Befestigungsschieber (11) andererseits gekoppelt ist, dass eine Schraubbewegung des Schraubelements (20) die Montagebewegung (15) erzeugt, vorzugsweise, dass die Montagerichtung (14) entlang der Türaußenhaut (7) verläuft.

7. Türgriffeinheit nach einem der vorhergehenden Ansprüche, **dadurch gekennzeichnet, dass** das mindestens eine Eingriffselement (16) zusammen mit dem mindestens einen Gegeneingriffselement (17) einen Umlenkmechanismus (23) bereitstellt bzw. bereitstellen, der auf die Montagebewegung (15) in den Befestigungsschieber (11) eine Zustellbewegung (24) auf die Türaußenhaut (7) zu einleitet, und/oder, der auf die Montagebewegung (15) in das Griffmodul (8) eine Zustellbewegung (25) auf die Türaußenhaut (7) zu einleitet.

8. Türgriffeinheit nach Anspruch 7, **dadurch gekennzeichnet, dass** das mindestens eine Eingriffselement (16) und das mindestens eine Gegeneingriffselement (17) zur Erzeugung der Zustellbewegung nach Art eines Keilgetriebes miteinander wechselwirken.

9. Türgriffeinheit nach einem der vorhergehenden Ansprüche, **dadurch gekennzeichnet, dass** das mindestens eine Eingriffselement (16) und das mindestens eine Gegeneingriffselement (17) zur Vormontage und/oder zur Endmontage paarweise ineinander eintauchen.

10. Türgriffeinheit nach einem der vorhergehenden Ansprüche, **dadurch gekennzeichnet, dass** sich das Griffmodul (8) an der Türaußenhaut (7) oder an einem der Türaußenhaut (7) zugeordneten Tür-Strukturelement (7a), insbesondere an einem Randbereich der Griffausnehmung (6) der Türaußenhaut (7), mit einer auf die Verspannung zurückgehenden Verspannkraft (V) von der Türinnenseite (4) aus abstützt, vorzugsweise, dass das Griffteil (9) frei von der Verspannung des Griffmoduls (8) ist.

11. Türgriffeinheit nach Anspruch 7 und ggf. nach einem der Ansprüche 8 bis 10, **dadurch gekennzeichnet, dass** das mindestens eine Gegeneingriffselement (17) an einer türfesten Komponente, insbesondere an der Türaußenhaut (7) oder an einem der Türaußenhaut (7) zugeordneten Tür-Strukturelement (7a) oder an einem Montagemodul (34), angeordnet ist bzw. sind, so dass der Umlenkmechanismus (23) in den Befestigungsschieber (11) eine Zustellbewegung (24) auf die Türaußenhaut (7) zu einleitet.

12. Türgriffeinheit nach einem der vorhergehenden Ansprüche, **dadurch gekennzeichnet, dass** die Kopplung des Befestigungsschiebers (11) mit dem Griffmodul (8) darauf zurückgeht, dass der Befestigungsschieber (11) von dem Griffmodul (8) ausgebildet ist.

13. Türgriffeinheit nach einem der Ansprüche 1 bis 11, **dadurch gekennzeichnet, dass** die Kopplung des Befestigungsschiebers (11) mit dem Griffmodul (8) auf eine Längsführung des Griffmoduls (8) an dem Befestigungsschieber (11) zurückgeht, die entlang der Montagerichtung (14) ausgerichtet ist und dass das Griffmodul (8) in der Montagerichtung (14) blockiert ist.

14. Türgriffeinheit nach Anspruch 7 und ggf. nach einem der Ansprüche 8 bis 13, **dadurch gekennzeichnet, dass** der Befestigungsschieber (11) bei vormontierter Türgriffeinheit (1) an der Türaußenhaut (7) oder an einem der Türaußenhaut (7) zugeordneten Tür-Strukturelement (7a) längsgeführt ist, dass das mindestens eine Gegeneingriffselement (17) am Griffmodul (8) angeordnet ist und dass das Griffmodul (8) in der Montagerichtung (14) blockiert ist.

15. Montagemodul für eine Kraftfahrzeugtür (2) mit einem Montagemodulträger (35) und mindestens zwei an dem Monagemodulträger (35) befestigten Funktionskomponenten, wobei das Montagemodul (34) mit seinen Funktionskomponenten in oder an der Kraftfahrzeugtür (2) montierbar ist, wobei eine der Funktionskomponenten als Türgriffeinheit (1) nach einem der vorhergehenden Ansprüche ausgestaltet ist.

16. Montagemodul nach Anspruch 15, **dadurch gekennzeichnet, dass** die Kraftfahrzeugtür (2) eine Nass-Trockenraum-Trennung (2a) aufweist, die einen Nassraum von einem Trockenraum trennt, dass die Vormontage und die Endmontage der Türgriffeinheit (1) im Nassraum vorgesehen ist und dass das Montagemodul (34) im endmontierten Zustand eine Öffnung (2b) in der Nass-Trockenraum-Trennung (2a) verschließt und/oder die Nass-Trockenraum-Trennung (2a) ausbildet, vorzugsweise, dass das Verschließen der Öffnung (2b) in der Nass-Trockenraum-Trennung (2a) bzw. die Ausbildung der Nass-Trockenraum-Trennung (2a) mit der Vormontage der Türgriffeinheit (1) einhergeht.

17. Montagemodul nach Anspruch 15 oder 16, **dadurch gekennzeichnet, dass** das Montagemodul (34) ein weiteres Montagemodul (39) trägt, und dass das weitere Montagemodul (39) einen weiteren Montagemodulträger (40) aufweist, der ein Kraftfahrzeugschloss (36) und die Türgriffeinheit (1) trägt.

18. Kraftfahrzeugtür mit einer Türgriffeinheit (1) nach einem der Ansprüche 1 bis 14 und/oder mit einem Montagemodul (34) nach einem der Ansprüche 15 bis 17.

19. Verfahren zur Montage einer Türgriffeinheit (1) nach einem der Ansprüche 1 bis 14 an einer Kraftfahrzeugtür (2), **dadurch gekennzeichnet, dass** die Türgriffeinheit (1) von der Türinnenseite (4) aus an der Kraftfahrzeugtür (2) vormontiert wird, und dass anschließend eine Montagebewegung (15) in den Befestigungsschieber (11) eingeleitet und dadurch die Türgriffeinheit (1) endmontiert wird.

20. Verfahren nach Anspruch 19, **dadurch gekennzeichnet, dass** die Türgriffeinheit (1) zunächst an einem Montagemodul (34) befestigt wird, bevor die an dem Montagemodul (34) befestigte Türgriffeinheit (1) zusammen mit dem Montagemodul (34) an der Kraftfahrzeugtür (2) vormontiert wird.

21. Verfahren nach Anspruch 19 oder 20, **dadurch gekennzeichnet, dass** die Kraftfahrzeugtür (2) eine Nass-Trockenraum-Trennung (2a) aufweist, die einen Nassraum von einem Trockenraum trennt, dass die Vormontage und die Endmontage der Türgriffeinheit (1) im Nassraum stattfindet und dass im Zuge der Vormontage der Türgriffeinheit (1) eine Öffnung (2b) in der Naß-Trockenraum-Trennung (2a) der Kraftfahrzeugtür (2) durch das Montagemodul (34) verschlossen wird oder die Nass-Trockenraum-Trennung (2a) von dem Montagemodul (34) ausgebildet wird.

## Claims

1. Door handle unit for a motor vehicle door (2) which can be installed as such from the door inner side (4) on a handle recess (6) of the door outer skin (7) of the motor vehicle door (2), especially in a flush or set back manner in relation to the door outer skin (7), wherein the door handle unit (1) has a handle module (8) and an especially elongate handle part (9) which is accommodated by the handle module (8), wherein the handle module (8) has a mechanism for the motorized adjustment of the handle part (9), wherein the door handle unit (1) can be pre-installed on the motor vehicle door (2),
**characterized in that,**
the door handle unit (1) has a fastening slide (11) which, with the door handle unit (1) pre-installed, is coupled to the handle module (8) on one side and to the motor vehicle door (2) on the other side, **in that** for the final installation of the door handle unit (1) an installation movement (15) can be introduced into the fastening slide (11) by means of a tool (13) in an installation direction (14) from a narrow side (12) of the motor vehicle door (2), **in that** the fastening slide (11) has at least one engagement element (16) which is designed to interact with a mating engagement element (17) in the course of the final installation and from the installation movement (15) to create a clamping of the handle module (8) by the door outer skin (7) or a door structural element (7a) which is associated with the door outer skin (7).

2. Door handle unit according to Claim 1, **characterized in that** the fastening slide (11) has at least two separate engagement elements (16) which are spaced apart with regard to the installation direction (14) and which are designed to interact with mating engagement elements (17) in the course of the final installation and from the installation movement (15) to create a clamping of the handle module (8) by the door outer skin (7) or a door structural element (7a) which is associated with the door outer skin (7).

3. Door handle unit according to Claim 2, **characterized in that** the fastening slide (11) has at least two separate engagement elements (16) which are arranged spaced apart with regard to a transverse direction (18) which is oriented transversely to the installation direction (14) and which are designed to interact with mating engagement elements (17) in the course of the final installation and from the installation movement (15) to create a clamping of the handle module (8) by the door outer skin (7) or a door structural element (7a) which is associated with the door outer skin (7), preferably **in that** the fastening slide (11) has at least four engagement elements (16) which are oppositely arranged in pairs with regard to the elongate handle part (9) and which are designed to interact with mating engagement elements (17) in the course of the final installation and from the installation movement (15) to create a clamping of the handle module (8) by the door outer skin (7) or a door structural element (7a) which is associated with the door outer skin (7).

4. Door handle unit according to one of the preceding claims, **characterized in that** the fastening slide (11) is formed as a dimensionally stable, especially rigid, component, preferably **in that** the fastening slide (11) is formed in one piece, more preferably **in that** the fastening slide (11) is formed from metal, especially sheet metal, or from plastic.

5. Door handle unit according to one of the preceding claims, **characterized in that** the door handle unit (1) is designed to be connected in a form-fitting manner, with a clearance, to the motor vehicle door (2) for the pre-installation, preferably **in that** the door handle unit (1) is designed to be fitted in or on the motor vehicle door (2) or hooked into the motor vehicle door (2) for the pre-installation.

6. Door handle unit according to one of the preceding claims, **characterized in that** provision is made for a feed device (19) for creating the installation movement (15) in the installation direction (14) which, with the door handle unit (1) pre-installed, can be operated from a narrow side (12) of the motor vehicle door (2) by means of a tool (13), preferably **in that** the feed device (19) has a screw element (20) which is accessible from the narrow side (12) of the motor vehicle door (2) by means of a tool (13) and which, with the door handle unit (1) pre-installed, is coupled to the motor vehicle door (2) on one side and to the fastening slide (11) on the other side in such a way that a screw movement of the screw element (20) creates the installation movement (15), preferably **in that** the installation direction (14) extends along the door outer skin (7).

7. Door handle unit according to one of the preceding claims, **characterized in that** the at least one engagement element (16) together with the at least one mating engagement element (17) provides a deflection mechanism (23) which to the installation movement (15) introduces a feed movement (24) into the fastening slide (11) toward the door outer skin (7), and/or which to the installation movement (15) introduces a feed movement (25) into the handle module (8) toward the door outer skin (7).

8. Door handle unit according to Claim 7, **characterized in that** the at least one engagement element (16) and the at least one mating engagement element (17) interact with each other in the manner of a wedge gear for creating the feed movement.

9. Door handle unit according to one of the preceding claims, **characterized in that** the at least one engagement element (16) and the at least one mating engagement element (17) sink into each other in pairs for the pre-installation and/or for the final installation.

10. Door handle unit according to one of the preceding claims, **characterized in that** the handle module (8) is supported from the door inner side (4) on the door outer skin (7) or on a door structural element (7a) which is associated with the door outer skin (7), especially on an edge region of the handle recess (6) of the door outer skin (7) with a clamping force (V) which is attributed to the clamping, preferably **in that** the handle part (9) is free from the clamping of the handle module (8).

11. Door handle unit according to Claim 7 and, if applicable, according to one of Claims 8 to 10, **characterized in that** the at least one mating engagement element (17) is arranged on a component, fastened to the door, especially on the door outer skin (7) or on a door structural element (7a) which is associated with the door outer skin (7) or on an installation module (34), so that the deflection mechanism (23) introduces a feed movement (24) into the fastening slide (11) toward the door outer skin (7).

12. Door handle unit according to one of the preceding claims, **characterized in that** the coupling of the fastening slide (11) to the handle module (8) is attributed to the fact that the fastening slide (11) is formed by the handle module (8).

13. Door handle unit according to one of Claims 1 to 11, **characterized in that** the coupling of the fastening slide (11) to the handle module (8) is attributed to a longitudinal guiding of the handle module (8) on the fastening slide (11) which is oriented along the installation direction (14) and **in that** the handle module (8) is blocked in the installation direction (14).

14. Door handle unit according to Claim 7 and, if applicable, according to one of Claims 8 to 13, **characterized in that** the fastening slide (11), with the door handle unit (1) pre-installed, is longitudinally guided on the door outer skin (7) or on a door structural element (7a) which is associated with the door outer skin (7), **in that** the at least one mating engagement element (17) is arranged on the handle module (8) and **in that** the handle module (8) is blocked in the installation direction (14).

15. Installation module for a motor vehicle door (2) with an installation module carrier (35) and at least two functional components, fastened on the installation module carrier (35), wherein the installation module (34) can be installed with its functional components in or on the motor vehicle door (2), wherein one of the functional components is designed as a door handle unit (1) according to one of the preceding claims.

16. Installation module according to Claim 15, **characterized in that** the motor vehicle door (2) has a wet-dry space partition (2a) which separates a wet space from a dry space, **in that** the pre-installation and the final installation of the door handle unit (1) is provided in the wet space and **in that** the installation module (34) in the finally installed state closes off an opening (2b) in the wet-dry space partition (2a) and/or forms the wet-dry space partition (2a), preferably **in that** the closing off of the opening (2b) in the wet-dry space partition (2a) or the forming of the wet-dry space partition (2a) is accompanied by the pre-installation of the door handle unit (1).

17. Installation module according to either of Claims 15 and 16, **characterized in that** the installation module (34) carries a further installation module (39), and **in that** the further installation module (39) has a further installation module carrier (40) which carries a motor vehicle lock (36) and the door handle unit (1).

18. Motor vehicle door with a door handle unit (1) according to one of Claims 1 to 14 and/or with an installation module (34) according to one of Claims 15 to 17.

19. Method for installing a door handle unit (1) according to one of Claims 1 to 14 on a motor vehicle door (2), **characterized in that** the door handle unit (1) is pre-installed on the motor vehicle door (2) from the door inner side (4), and **in that** an installation movement (15) is then introduced into the fastening slide (11) and as a result the door handle unit (1) is finally installed.

20. Method according to Claim 19, **characterized in that** the door handle unit (1) is first of all fastened on an installation module (34) before the door handle unit (1), fastened on the installation module (34), is pre-installed on the motor vehicle door (2) together with the installation module (34).

21. Method according to either of Claims 19 and 20, **characterized in that** the motor vehicle door (2) has a wet-dry space partition (2a) which separates a wet space from a dry space, **in that** the pre-installation and the final installation of the door handle unit (1) takes place in the wet space and **in that** in the course of the pre-installation of the door handle unit (1) an opening (2b) in the wet-dry space partition (2a) of the motor vehicle door (2) is closed off by the installation module (34) or the wet-dry space partition (2a) is formed by the installation module (34).

## Revendications

1. Unité formant poignée de porte destinée à une porte de véhicule automobile (2), qui peut être montée en tant que telle depuis le côté intérieur (4) de la porte au niveau d'un évidement de poignée (6) de l'enveloppe de porte extérieure (7) de la porte de véhicule automobile (2), en particulier à fleur ou en retrait par rapport à l'enveloppe de porte extérieure (7), l'unité formant poignée de porte (1) comportant un module de poignée (8) et une partie de poignée (9) notamment allongée qui est logée par le module de poignée (8), le module de poignée (8) comportant un mécanisme de réglage motorisé de la partie de poignée (9), l'unité formant poignée de porte (1) étant pré-montée sur la porte de véhicule automobile (2),
**caractérisée en ce que**
l'unité de poignée de porte (1) comporte un coulisseau de fixation (11) qui, lorsque l'unité de poignée de porte (1) est pré-montée, est accouplé d'une part au module de poignée (8) et d'autre part à la porte de véhicule automobile (2), **en ce que**, pour effectuer le montage final de l'unité formant poignée de porte (1) depuis le petit côté (12) de la porte de véhicule automobile (2) au moyen d'un outil (13), un mouvement de montage (15) dans le sens de montage (14) peut être communiqué au coulisseau de montage (11), **en ce que** le coulisseau de montage (11) comporte au moins un élément d'engagement (16) qui est conçu pour interagir avec un élément d'engagement homologue (17) dans le cadre du montage final et pour générer à partir du mouvement de montage (15) une précontrainte du module de poignée (8) avec l'enveloppe de porte extérieure (7) ou un élément structurel de porte (7a) associé à l'enveloppe de porte extérieure (7).

2. Unité formant poignée de porte selon la revendication 1, **caractérisée en ce que** le coulisseau de fixation (11) comporte au moins deux éléments d'engagement séparés (16) qui sont espacés l'un de l'autre par rapport au sens de montage (14) et qui sont conçus pour interagir avec des éléments d'engagement homologues (17) dans le cadre du montage final et pour générer à partir du mouvement de montage (15) une précontrainte du module de poignée (8) avec l'enveloppe de porte extérieure (7) ou un élément structurel de porte (7a) associé à l'enveloppe de porte extérieure (7).

3. Unité formant poignée de porte selon la revendication 2, **caractérisée en ce que** le coulisseau de fixation (11) comporte au moins deux éléments d'engagement séparés (16), qui sont disposés à distance l'un de l'autre par rapport à une direction transversale (18) qui est orientée transversalement au sens de montage (14) et qui sont conçus pour interagir avec les éléments d'engagement homologues (17) dans le cadre du montage final et pour générer à partir du mouvement de montage (15) une précontrainte du module de poignée (8) avec l'enveloppe de porte extérieure (7) ou un élément structurel de porte (7a) associé à l'enveloppe de porte extérieure (7), de préférence **en ce que** le coulisseau de fixation (11) comporte au moins quatre éléments d'engagement (16) qui sont disposés les uns en face des autres par paire par rapport à la partie de poignée allongée (9) et qui sont conçus pour interagir avec des éléments d'engagement homologues (17) dans le cadre du montage final et pour générer à partir du mouvement de montage (15) une précontrainte du module de poignée (8) avec l'enveloppe de porte extérieure (7) ou un élément structurel de porte (7a) associé à l'enveloppe de porte extérieure (7).

4. Unité de poignée de porte selon l'une des revendications précédentes, **caractérisée en ce que** le coulisseau de fixation (11) est conçu comme un composant de forme stable, notamment rigide, de préférence **en ce que** le coulisseau de montage (11) est conçu d'une seule pièce, plus préférablement **en ce que** le coulisseau de montage (11) est conçu en métal, en particulier en tôle, ou en matière synthétique.

5. Unité formant poignée de porte selon l'une des revendications précédentes, **caractérisée en ce que** l'unité formant poignée de porte (1) est conçue pour être reliée à la porte de véhicule automobile (2) par complémentarité de formes avec jeu, de préférence **en ce que** l'unité formant poignée de porte (1) est conçue pour être placée dans ou sur la porte de véhicule automobile (2) ou accrochée dans la porte de véhicule (2) en vue du pré-montage.

6. Unité formant poignée de porte selon l'une des revendications précédentes, **caractérisée en ce qu'**un dispositif d'avancement (19) est prévu pour générer le mouvement de montage (15) dans le sens de montage (14), lequel dispositif de montage peut être actionné au moyen d'un outil (13) depuis un petit côté (12) de la porte de véhicule automobile (2) lorsque l'unité formant poignée de porte (1) est pré-montée, de préférence **en ce que** le dispositif d'avancement (19) comporte un élément fileté (20) qui est accessible au moyen d'un outil (13) depuis le petit côté (12) de la porte de véhicule automobile (2) et qui est accouplé d'une part à la porte de véhicule automobile (2) et d'autre part au coulisseau de montage (11) lorsque l'unité formant poignée de porte (1) est pré-montée de sorte qu'un mouvement de vissage de l'élément fileté (20) génère le mouvement de montage (15), de préférence **en ce que** le sens de montage (14) s'étende le long de l'enveloppe de porte extérieure (7).

7. Unité formant poignée de porte selon l'une des revendications précédentes, **caractérisée en ce que** l'au moins un élément d'engagement (16) constitue conjointement avec l'au moins un élément d'engagement homologue (17) un mécanisme de renvoi (23) qui, au mouvement de montage (15), communique au coulisseau de montage (11) un mouvement d'avance (24) vers l'enveloppe de porte extérieure (7) et/ou qui, au mouvement de montage (15), communique au module de poignée (8) un mouvement d'avance (25) vers l'enveloppe de porte extérieure (7).

8. Unité formant poignée de porte selon la revendication 7, **caractérisée en ce que** l'au moins un élément d'engagement (16) et l'au moins un élément d'engagement homologue (17) interagissent l'un avec l'autre à la manière d'une transmission à clavette pour générer le mouvement d'avance.

9. Unité formant poignée de porte selon l'une des revendications précédentes, **caractérisée en ce que** l'au moins un élément d'engagement (16) et l'au moins un élément d'engagement homologue (17) pénètrent par paires l'un dans l'autre pour effectuer le pré-montage et/ou le montage final.

10. Unité de poignée de porte selon l'une des revendications précédentes, **caractérisée en ce que** le module de poignée (8) s'appuie sur l'enveloppe de porte extérieure (7) ou sur un élément structurel de porte (7a) associé à l'enveloppe de porte extérieure (7), en particulier sur une région de bord de l'évidement de poignée (6) de l'enveloppe de porte extérieure (7) avec une force de précontrainte (V) due à la précontrainte depuis le côté intérieur (4) de la porte, de préférence **en ce que** la partie de poignée (9) est exempte de la précontrainte du module de poignée (8).

11. Unité formant poignée de porte selon la revendication 7 et éventuellement selon l'une des revendications 8 à 10, **caractérisée en ce que** l'au moins un élément d'engagement homologue (17) est disposé sur un composant fixé à la porte, en particulier sur l'enveloppe de porte extérieure (7) ou sur un élément structurel de porte (7a) associé à l'enveloppe de porte extérieure (7) ou sur un module de montage (34) de sorte que le mécanisme de renvoi (23) communique au coulisseau de fixation (11) un mouvement d'avance (24) vers l'enveloppe de porte extérieure (7).

12. Unité formant poignée de porte selon l'une des revendications précédentes, **caractérisée en ce que** l'accouplement du coulisseau de fixation (11) au module de poignée (8) est dû au fait que le coulisseau de fixation (11) est formé par le module de poignée (8).

13. Unité formant poignée de porte selon l'une des revendications 1 à 11, **caractérisée en ce que** l'accouplement du coulisseau de fixation (11) au module de poignée (8) est dû à un guidage longitudinal du module de poignée (8) sur le coulisseau de fixation (11), lequel guidage longitudinal est orienté dans le sens du montage (14) et **en ce que** le module de poignée (8) est bloqué dans le sens du montage (14).

14. Unité formant poignée de porte selon la revendication 7 et éventuellement selon l'une des revendications 8 à 13, **caractérisée en ce que**, lorsque l'unité formant poignée de porte (1) est pré-montée, le coulisseau de fixation (11) est guidé longitudinalement sur l'enveloppe de porte extérieure (7) ou sur un élément structurel de porte (7a) associé à l'enveloppe de porte extérieure (7), **en ce que** l'au moins un élément d'engagement homologue (17) est disposé sur le module de poignée (8) et **en ce que** le module de poignée (8) est bloqué dans le sens de montage (14).

15. Module de montage d'une porte de véhicule automobile (2) comprenant un support de module de montage (35) et au moins deux composants fonctionnels fixés au support de module de montage (35), le module de montage (34) pouvant être monté avec ses composants fonctionnels dans ou sur la porte de véhicule automobile (2), l'un des composants fonctionnels étant conçu comme une unité formant poignée de porte (1) selon l'une des revendications précédentes.

16. Module de montage selon la revendication 15, **caractérisé en ce que** la porte de véhicule automobile (2) comporte une séparation espace humide-espace sec (2a) qui sépare un espace humide d'un espace sec, **en ce que** le pré-montage et le montage final de l'unité formant poignée de porte (1) sont prévus dans l'espace humide et **en ce que** le module de montage (34) forme à l'état monté final une ouverture (2b) ménagée dans la séparation espace humide-espace sec (2a) et/ou forme la séparation espace humide-espace sec (2a), de préférence **en ce que** la fermeture de l'ouverture (2b) ménagée dans la séparation espace humide-espace sec (2a) ou la formation de la séparation espace humide-espace sec (2a) s'accompagne du pré-montage de l'unité formant poignée de porte (1).

17. Module de montage selon la revendication 15 ou 16, **caractérisé en ce que** le module de montage (34) porte un autre module de montage (39) et **en ce que** l'autre module de montage (39) comporte un autre support de module de montage (40) qui porte un verrou de véhicule automobile (36) et l'unité formant poignée de porte (1).

18. Porte de véhicule automobile comprenant une unité formant poignée de porte (1) selon l'une des revendications 1 à 14 et/ou avec un module de montage (34) selon l'une des revendications 15 à 17.

19. Procédé de montage d'une unité formant poignée de porte (1) selon l'une des revendications 1 à 14 sur une porte de véhicule automobile (2), **caractérisé en ce que** l'unité formant poignée de porte (1) est pré-montée depuis le côté intérieur (4) de la porte sur la porte de véhicule automobile (2) et **en ce qu'**un mouvement de montage (15) est ensuite communiqué au coulisseau de fixation (11) et **en ce que** le montage finale de l'unité formant poignée de porte (1) est effectué.

20. Procédé selon la revendication 19, **caractérisé en ce que** l'unité formant poignée de porte (1) est d'abord fixée à un module de montage (34) avant d'effectuer le pré-montage de l'unité formant poignée de porte (1), fixée au module de montage (34), conjointement avec le module de montage (34) sur la porte de véhicule automobile (2).

21. Procédé selon la revendication 19 ou 20, **caractérisé en ce que** la porte de véhicule automobile (2) comporte une séparation espace humide-espace sec (2a) qui sépare un espace humide d'un espace sec, **en ce que** le pré-montage et le montage final de l'unité formant poignée de porte (1) sont effectués dans l'espace humide et **en ce que**, lors du pré-montage de l'unité formant poignée de porte (1), une ouverture (2b) ménagée dans la séparation espace humide-espace sec (2a) de la porte de véhicule automobile (2) est fermée par le module de montage (34) ou la séparation espace humide-espace sec (2a) est formée par le module de montage (34).
